(19) Europäisches Patentamt
European Patent Office
Office européen des brevets

(11) **EP 4 671 743 A1**

(12) **EUROPEAN PATENT APPLICATION**

(43) Date of publication:
**31.12.2025 Bulletin 2026/01**

(21) Application number: **25182534.5**

(22) Date of filing: **13.06.2025**

(51) International Patent Classification (IPC):
**G01N 21/90** (2006.01)      **G01N 21/47** (2006.01)
**G01N 21/51** (2006.01)

(52) Cooperative Patent Classification (CPC):
**G01N 21/9027; G01N 21/47; G01N 21/51;**
G01N 2021/4721; G01N 2021/4726;
G01N 2021/4735

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.06.2024 JP 2024102492**

(71) Applicant: **KONICA MINOLTA, INC.
Tokyo 100-7015 (JP)**

(72) Inventor: **NAGAI, Koji
Tokyo, 100-7015 (JP)**

(74) Representative: **Gille Hrabal
Partnerschaftsgesellschaft mbB
Patentanwälte
Brucknerstraße 20
40593 Düsseldorf (DE)**

(54) **QUALITY INSPECTION APPARATUS, QUALITY INSPECTION METHOD, AND PROGRAM**

(57)      Disclosed is a quality inspection apparatus (10) that inspects quality of an inspection target sample (S) filled in a transparent container (B), including: an illumination section (13) that illuminates with lighting light (131) a bottom surface of the transparent container; an imaging section (12) that images a lateral surface of the transparent container; and a hardware processor (20) that acquires a light scattering property of the inspection target sample based on an imaging result of the imaging section, and detects an internal state of the inspection target sample based on the acquired light scattering property, wherein the inspection target sample is a lyophilized or powdery pharmaceutical product.

FIG.2

EP 4 671 743 A1

**Description**

BACKGROUND OF THE INVENTION

TECHNICAL FIELD

The present invention relates to a quality inspection apparatus, a quality inspection method, and a program.

DESCRIPTION OF RELATED ART

In the production of lyophilized or powdery pharmaceutical products, when moisture remains due to insufficient drying of the products, hydrolysis reactions between the moisture and the active ingredients may occur, potentially affecting the storage stability of the products. Therefore, the pharmaceutical products are to be produced so that the moisture content in the products is sufficiently small.

In the production of lyophilized or powdery pharmaceutical products, there is a need to inspect the components of the pharmaceutical products, such as the moisture content.

In the production of lyophilized or powdery pharmaceutical products, some products may contain the moisture content that is not as designed due to the influence of an increase in size of a production apparatus (lyophilization chamber). There may also be variations in the moisture content among the products. Therefore, in the production of the pharmaceutical products, there is a need for non-destructive inspection of all products.

In the production of lyophilized or powdery pharmaceutical products, insufficient drying of the pharmaceutical products may cause internal structure problems such as collapse and meltback, and/or appearance problems with the pharmaceutical products. Therefore, there is a need to inspect the internal structure of the pharmaceutical products, which cannot be inspected by visual inspection.

There is a need to inspect lyophilized or powdery pharmaceutical products for unintentional contamination with foreign matter such as rubber, resin, and glass.

Japanese Patent No. 3351910 and WO 2007/063840 disclose techniques of inspecting lyophilized products or pharmaceutical products.

SUMMARY OF THE INVENTION

However, conventionally, inspections of the internal state of lyophilized products or pharmaceutical products at the time of production generally involve sampling and destructive inspection, raising a concern about the ability to detect all defective products. On the other hand, it has been difficult to directly measure the internal state of lyophilized products or pharmaceutical products by visual inspection as a conventional non-destructive inspection.

For the production of lyophilized or powdery pharmaceutical products, there is a need for a precise inspection of the products.

Therefore, in order to solve the above-described problems, an object of the present invention is to provide a quality inspection apparatus, a quality inspection method, and a program capable of performing a more precise inspection of the quality of a lyophilized or powdery pharmaceutical product.

To achieve at least one of the abovementioned objects, a quality inspection apparatus reflecting one aspect of the present invention is a quality inspection apparatus that inspects quality of an inspection target sample filled in a transparent container, comprising: an illumination section that illuminates a bottom surface of the transparent container; an imaging section that images a lateral surface of the transparent container; and a hardware processor that acquires a light scattering property of the inspection target sample based on an imaging result of the imaging section, and detects an internal state of the inspection target sample based on the acquired light scattering property, wherein the inspection target sample is a lyophilized or powdery pharmaceutical product.

To achieve at least one of the abovementioned objects, a quality inspection method reflecting another aspect of the present invention is a quality inspection method executed by a quality inspection apparatus that inspects quality of an inspection target sample filled in a transparent container and includes: an illumination section that illuminates a bottom surface of the transparent container; and an imaging section that images a lateral surface of the transparent container, the method comprising: acquiring a light scattering property of the inspection target sample based on an imaging result of the imaging section; and detecting an internal state of the inspection target sample based on the light scattering property acquired in the acquiring, wherein the inspection target sample is a lyophilized or powdery pharmaceutical product.

To achieve at least one of the abovementioned objects, a program reflecting still another aspect of the present invention causes a computer of a quality inspection apparatus that inspects quality of an inspection target sample filled in a transparent container and includes: an illumination section that illuminates a bottom surface of the transparent container; and an imaging section that images a lateral surface of the transparent container to execute: acquiring a light scattering property of the inspection target sample based on an imaging result of the imaging section; and detecting an internal state of the inspection target sample based on the light scattering property acquired in the acquiring, wherein the inspection target sample is a lyophilized or powdery pharmaceutical product.

BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:

FIG. 1 is a block diagram of an inspection apparatus according to the present embodiment;
FIG. 2 is a perspective view of an inspection device;
FIG. 3 illustrates a configuration of the inspection device;
FIG. 4 illustrates an example of a light scattering property;
FIG. 5 is a flowchart as an example of a quality inspection process;
FIG. 6 is a flowchart as an example of an absorption spectrum calculation process;
FIG. 7 illustrates an example of evaluation positions;
FIG. 8 illustrates an example of an absorption spectrum;
FIG. 9 illustrates an example of comparison between a light scattering property of a reference sample and a light scattering property of an inspection target sample;
FIG. 10 illustrates an example of a ratio of the light scattering property of the reference sample to the light scattering property of the inspection target sample;
FIG. 11 illustrates the light scattering property of the inspection target sample and an exponential attenuation property;
FIG. 12 illustrates an example of comparison between the light scattering property of the reference sample and the light scattering property of the inspection target sample;
FIG. 13 illustrates an example of a difference between the light scattering property of the reference sample and the light scattering property of the inspection target sample;
FIG. 14 illustrates the scattering coefficient of the light scattering property of the reference sample and the scattering coefficient of the light scattering property of the inspection target sample;
FIG. 15 illustrates an example of imaging data based on an intensity of transmitted diffused light of the inspection target sample;
FIG. 16 illustrates an example of imaging data containing foreign matter;
FIG. 17 illustrates a case where an illumination region of an illumination section is widened; and
FIG. 18 illustrates a case where the illumination region of the illumination section is narrowed.

DETAILED DESCRIPTION

Hereinafter, one or more embodiments of the present invention will be described with reference to the drawings. However, the scope of the invention is not limited to the disclosed embodiments.

[Configuration Example of Quality Inspection Apparatus 1]

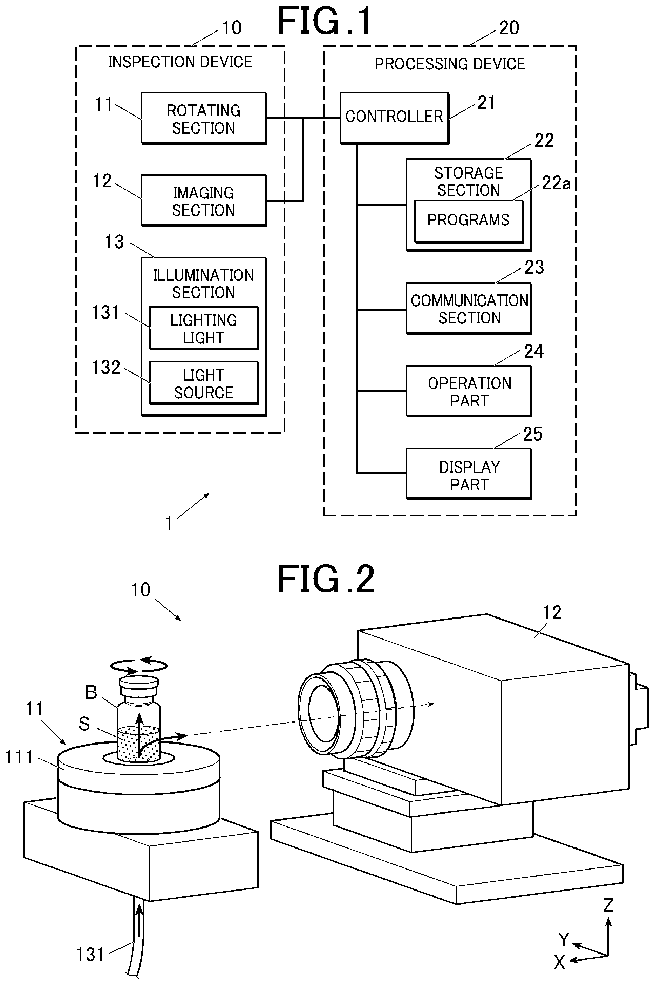

FIG. 1 is a block diagram of a quality inspection apparatus 1 according to the present embodiment. The quality inspection apparatus 1 is configured to inspect the quality of an inspection target sample. The inspection target sample is a lyophilized or powdery pharmaceutical product.

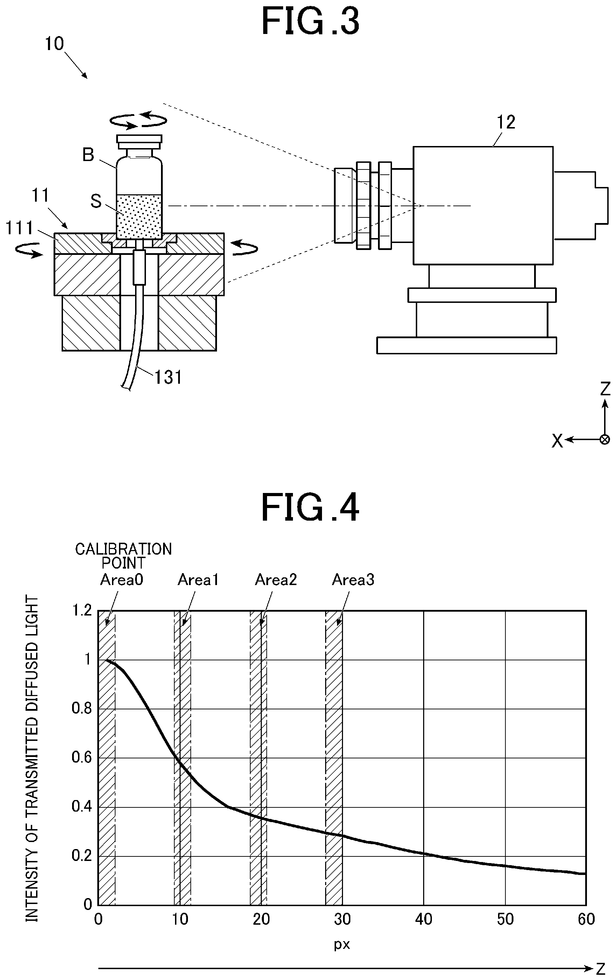

As illustrated in FIG. 1, the quality inspection apparatus 1 includes an inspection device 10 and a processing device 20. FIG. 2 is a perspective view of the inspection device 10. FIG. 3 illustrates a configuration of the inspection device 10. In FIG. 2 and FIG. 3, the X-axis direction and the Y-axis direction are two horizontal directions orthogonal to each other, and the vertical direction orthogonal to the X-axis and the Y-axis is defined as the Z-axis direction.

The inspection device 10 includes a rotating section 11, an imaging section 12, and an illumination section 13.

The rotating section 11 rotates a sample stage 111 on a horizontal plane (XY plane) by the drive of a motor. On the sample stage 111, a transparent container B filled with a sample S is placed. The sample S is a lyophilized or powdery pharmaceutical product and is an inspection target of the quality inspection apparatus 1.

In the present embodiment, the quality inspection apparatus 1 is installed in a production line (inline) for producing lyophilized or powdery pharmaceutical products. The inspection device 10 includes a conveyance mechanism for conveying the transparent container B to the sample stage 111.

For another example, the quality inspection apparatus 1 may be installed off-line in a laboratory as a benchtop apparatus. In this case, the inspection device 10 may not include a conveyance mechanism for conveying the transparent container B to the sample stage 111.

The imaging section 12 includes, for example, a hyperspectral camera. The imaging section 12 images a lateral surface of the transparent container B that is placed on the sample stage 111 and rotated by the rotating section 11.

In the present embodiment, the sample S is rotated once while being imaged by the imaging section 12. Therefore, the push-broom method is optimal as the spectroscopic principle of the hyperspectral camera as the imaging section 12. However, the spectroscopic principle of the hyperspectral camera may be a wavelength scanning type such as a Fabry-Perot type or a snapshot type. When the wavelength resolution provided by the imaging section 12 is not particularly important, the imaging section 12 may include a multispectral camera.

The imaging section 12 images the sample S in a range of one frame for one full rotation.

The imaging section 12 performs imaging by separating wavelengths of light into a plurality of wavelength bands. Specifically, the imaging section 12 generates a data cube constituted of superposed two-dimensional plane (YZ plane) images of the sample S, which is the imaging target, of the respective spectrally separated wavelength bands. The imaging section 12 acquires spectral information by imaging (capturing an image of) the sample S.

Accordingly, the imaging section 12 measures, in all directions of the sample S, an intensity of transmitted diffused light generated by irradiating the sample S with illumination light of the illumination section 13 and a light scattering property of the sample S. The imaging section 12 outputs a measurement result of the intensity of the transmitted diffused light and the light scattering property to the processing device 20.

FIG. 4 illustrates details of the light scattering property obtained by imaging one rotation of the sample S. In the example illustrated in FIG. 4, the horizontal axis indicates the pixel (px) in the Z-axis direction in the range of one frame, and the vertical axis indicates the measured intensity of the transmitted diffused light.

As illustrated in FIG. 4, the light scattering property exhibits a peak at a specific position (Area0). In the positive Z-axis direction of Area0, the light scattering property is gradually attenuated toward the positive Z-axis direction due to scattering properties, absorption properties, and the like of the sample S. The light scattering property varies depending on the product type and the production process of the sample S.

In the examples illustrated in FIGs. 2 and 3, the inspection device 10 includes one imaging section 12. The inspection device 10 may include two or more imaging sections 12. With a plurality of imaging sections 12, a plurality of samples S can be simultaneously imaged. Thus, the tact time and the inspection speed of a quality inspection process that inspects the quality of the sample S can be improved.

It is desirable that the imaging wavelength range of the imaging section 12 include a near-infrared region in which transmittance is relatively high and characteristic absorption peaks of components, such as active ingredients, excipients, and moisture contained in the sample S can be acquired. In the present embodiment, the imaging wavelength range of the imaging section 12 is 900 to 1700 nm.

The illumination section 13 includes a lighting light 131 and a light source 132. The illumination section 13 irradiates, with the illumination light, the bottom surface of the transparent container B filled with the sample S.

The lighting light 131 includes a plurality of optical fibers bundled together. The lighting light 131 guides the illumination light emitted from the light source 132 to a tip end of the lighting light 131 (a side facing the bottom surface of the transparent container B). The lighting light 131 emits the illumination light from the tip end surface toward the bottom surface of the transparent container B.

It is preferable that the light source 132 includes a halogen lamp that has a broad wavelength range and a relatively high light intensity. The light source 132 may include a light emitting diode (LED).

The processing device 20 includes, for example, a personal computer. The processing device 20 is connected to the rotating section 11 and the imaging section 12 of the inspection device 10 via not-illustrated wires and controls the operations of the rotating section 11 and the imaging section 12. The processing device 20 may be connected to the illumination section 13 via wires to control the operation of the illumination section 13.

The processing device 20 includes a controller (hardware processor) 21, a storage section 22, a communication section 23, an operation part 24, and a display part 25.

The controller 21 includes a processor, such as a central processing unit (CPU) or a micro processing unit (MPU), and a memory, such as a random-access memory (RAM), for example. The controller 21 executes programs 22a stored in a memory, such as a RAM, or the storage section 22 to execute various processes including the quality inspection process for the sample S.

The storage section 22 includes, for example, a storage module, such as a hard disk drive (HDD), a solid state drive (SSD), a read only memory (ROM), and/or a RAM. The storage section 22 stores, for example, a system program, an application program, various data, and the like. Specifically, the storage section 22 stores the programs 22a for executing the quality inspection process for the sample S.

The communication section 23 includes, for example, a network interface card (NIC), a communication module including a receiver and a transmitter, and the like. The communication section 23 communicates various kinds of information with an external device or the like connected via a network such as the Internet.

The operation part 24 includes, for example, a mouse, a keyboard, switches, and buttons. The operation part 24 may be a touch screen integrally combined with the display part 25 or may be an interface that receives a sound input, for example. The operation part 24 receives a command according to various input operations from a user, converts the received command into an operation signal, and outputs the operation signal to the controller 21.

The display part 25 includes, for example, a liquid crystal display or an organic electro luminescence (EL) display. The display part 25 displays contents, based on display data output by the controller 21.

The quality inspection apparatus 1 configured as described above can be easily incorporated into an existing visual inspection apparatus. For example, a benchtop spectroscopic analyzer with diffuse reflection measurement may not be incorporated inline owing to a space constraint. On the other hand, the quality inspection apparatus 1 can be easily incorporated into an existing visual inspection apparatus by using the imaging section 12 and the illumination section 13 as a machine vision camera of the existing visual inspection apparatus.

[Operation of Quality Inspection Apparatus 1]

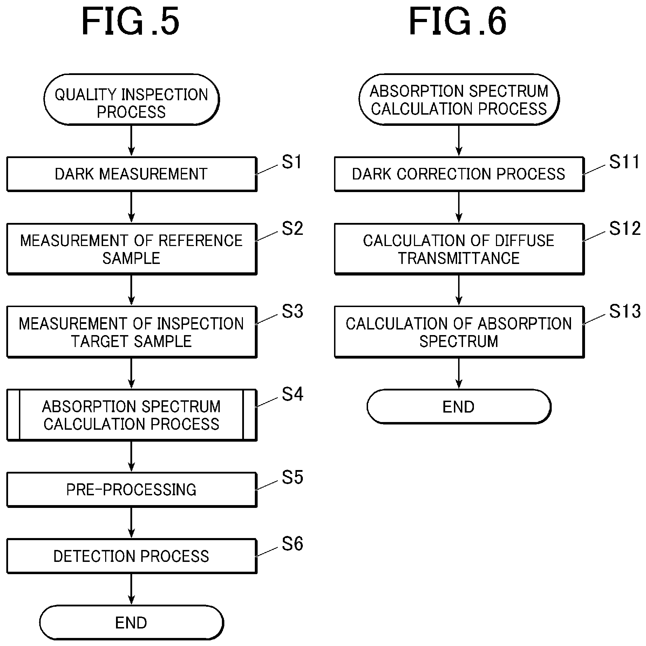

Next, an operation of the quality inspection apparatus 1 according to the present embodiment will be described. FIG. 5 is a flowchart illustrating a flow of the quality inspection process in which the inspection apparatus 1 inspects the quality of the sample S.

(Quality Inspection Process)

A user performs imaging with the imaging section 12 of the inspection apparatus 1 while blocking light. Thus, the imaging section 12 performs dark measurement and outputs dark data as a measurement result to the processing device 20 (step S1).

Next, the user images a sample with the imaging section 12 as a reference for quality inspection. This sample is referred to as a "reference sample". Thus, the imaging section 12 performs measurement of the reference sample and outputs measurement data of the reference sample to the processing device 20 (step S2).

In the imaging, the imaging section 12 forms an image based on a signal intensity of the illumination light emitted from the illumination section 13. This light passes through an optical path to the imaging section 12, where the light is absorbed and scattered inside the sample. In the measurement of the reference sample, a signal for an object having known absorption and scattering properties may be obtained in advance, and the signal may be used as a reference value. The reference sample may be a standard white plate made of polytetrafluoroethylene (PTFE) or may be a predetermined sample similar to the measurement target, for example.

The measurement of the reference sample in step S2 includes calibration at the time of activation of the imaging section 12.

Next, with the imaging section 12, the user images one rotation of the sample S, which is the inspection target sample, placed on the sample stage 111. Thus, the imaging section 12 measures the intensity of transmitted diffused light and the light scattering property for one rotation of the inspection target sample, and outputs measurement data to the processing device 20 (step S3).

Instead of performing the measurement for one rotation of the inspection target sample, the imaging section 12 may perform measurement for only one frame of the inspection target sample or for any range of the inspection target sample in step S3. In this case, since the intensity of the transmitted diffused light can be measured from the measurement result for one frame, it is possible to calculate the absorption spectrum from the measurement data of the intensity of the transmitted diffused light in step S4 described later. When the inspection target sample has a crack, the intensity of the transmitted diffused light and the light scattering property may not be measured at the location of the crack. It is therefore preferable that the location of the crack be excluded from the target range of a detection process in step 6, which is described later.

Next, the controller 21 of the processing device 20 acquires the measurement data output by the imaging section 12. That is, the controller 21 acquires the light scattering property of the inspection target sample based on the imaging result of the imaging section 12. The controller 21 functions as an acquisition section. Step S3 is an acquisition step.

The controller 21 performs an absorption spectrum calculation process illustrated in FIG. 6, based on the acquired measurement data of the inspection target sample (step S4).

(Absorption Spectrum Calculation Process)

The controller 21 performs a dark correction process (step S11). Specifically, the controller 21 subtracts the dark data obtained in step S1 from the measurement data of the inspection target sample. Accordingly, noise due to dark current of the imaging section 12 can be removed from the measurement data of the inspection target sample.

Next, the controller 21 calculates the diffuse transmittance of the inspection target sample based on the measurement data of the inspection target sample after the dark correction process in step S11 (step S12). Following is the description of two methods for calculating the diffuse transmittance of the inspection target sample.

(Method 1 for Calculating Diffuse Transmittance)

In a method 1 for calculating the diffuse transmittance, in step S3, the user images the inspection target sample at two or more measurement points in the Z-axis direction (the vertical direction with respect to the transparent container B) with the imaging section 12. That is, the imaging section 12 captures images at a plurality of measurement points in the vertical direction from the bottom surface of the transparent container B. The controller 21 of the processing device 20 acquires the light scattering property of the inspection target sample based on the intensity of the transmitted diffused light at the plurality of measurement points.

The controller 21 performs the following calibration process on the light scattering property, which is measurement data measured at the two or more measurement points. Specifically, the controller 21 sets a pixel indicating a peak, as in Area0 in FIG. 4, as a calibration point. The controller 21 divides the intensity of the transmitted diffused light at other measurement points by the intensity of the transmitted diffused light at the calibration point. The other measurement points are, for example, Area1, Area2, and Area3 in FIG. 4. Alternatively, the controller 21 may divide the intensity of the transmitted diffused light at the other measurement points by the average value of the intensity of the transmitted diffused light within a predetermined range including the calibration point. The controller 21 executes the calibration process for each frame imaged by the imaging section 12. The measurement data after the calibration process indicates the diffuse transmittance of the inspection target sample. By executing the calibration process, the controller 21 normalizes the entire diffuse transmittances by setting the average value of the diffusion transmittance within a predetermined range including the calibration point to 1.

By the calibration process, the influence of the light source 132 can be removed from the diffuse transmittance of the inspection target sample. Thus, in the detection process in step S6 described later, evaluation can be performed focusing only on the absorption of the illumination light by the inspection target sample from the calibration point (reference position) to the other measurement points (evaluation positions).

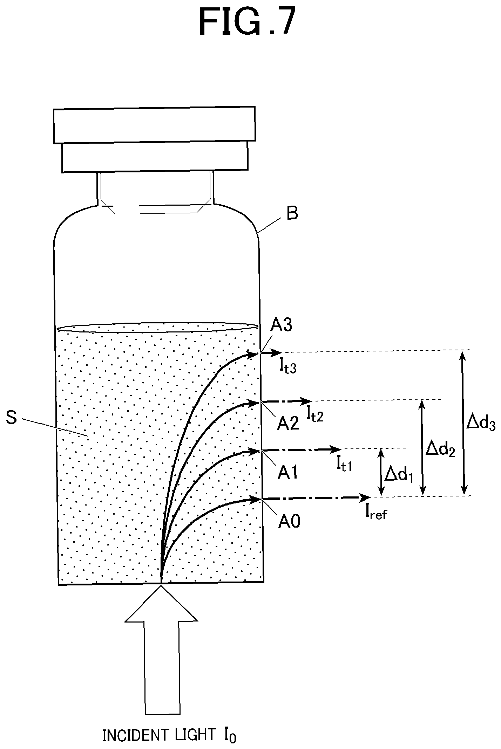

FIG. 7 illustrates the reference position A0 and the evaluation positions A1 to A3. As illustrated in FIG. 7, the distance from the reference position A0 to the evaluation position A1 is $\Delta d_1$, the distance from the reference position A0 to the evaluation position A2 is $\Delta d_2$, and the distance from the reference position A0 to the evaluation position A3 is $\Delta d_3$. In this case, the diffuse transmittance Tn at a predetermined evaluation position An is obtained by the following Equation (1) (Lambert-Beer law).

[Expression 1]

$$T_n = \frac{S-D}{W-D} = \frac{I_{tn}}{I_{ref}} = \frac{I_0 exp\{-\varepsilon c(\rho + \Delta d_n)\}}{I_0 exp(-\varepsilon c\rho)} = exp(-\varepsilon c \Delta d_n) \cdot \cdot \cdot (1)$$

S represents measurement data at the evaluation position An. W represents measurement data at the reference position A0. D represents dark data. $\varepsilon$ represents the molar absorption coefficient. c represents the concentration of the inspection target sample. p represents an average scattering distance (distance from the tip end surface of the lighting light 131 to the reference position A0). $I_{tn}$ represents the light intensity measured at the evaluation position An. $I_{ref}$ represents the light intensity measured at the reference position A0. $I_0$ represents the intensity of the illumination light emitted from the light source 132. $\Delta d_n$ represents the distance from the reference position A0 to the evaluation position An.

As indicated by Equation (1), the influence of the light source 132 ($I_0$) on the diffuse transmittance Tn of the inspection target sample can be removed. Thus, in the detection process in step S6 described later, evaluation can be performed focusing on the influence of the components and/or the concentration of the inspection target sample. In the detection process in step S6, evaluation can be performed focusing on the predetermined evaluation position An of the inspection target sample.

In the calculation of the diffuse transmittance of the inspection target sample by the method 1 described above, the measurement of the reference sample in step 2 may be omitted.

(Method 2 for Calculating Diffuse Transmittance)

In a method 2 for calculating the diffuse transmittance, the controller 21 calculates the diffuse transmittance Tn at the predetermined evaluation position An by using the measurement data of the reference sample obtained in step S2 as W in Equation (1) above. In this method, since the detection process in step 6 described later can be performed based on the reference sample, an abnormality in the inspection target sample can be detected.

In Equation (1), W may be measurement data of a predetermined sample or measurement data at a different evaluation position of the inspection target sample.

For another example, the quality inspection apparatus 1 may include a reference light receiving section (not illustrated) that measures the amount of light emitted from the light source 132 of the illumination section 13. In this case, in the method 2 for calculating the diffuse transmittance, the controller 21 uses the amount of light received from the light source 132 measured by the reference light receiving section as W in the above Equation (1) to calculate the diffuse transmittance Tn at the predetermined evaluation position An.

Next, the controller 21 calculates the absorbance of the inspection target sample based on the diffuse transmittance of the inspection target sample calculated in step S12. The controller 21 calculates an absorbance at each wavelength of the transmitted diffused light to calculate the absorption spectrum (step S13) and ends the absorption spectrum calculation process.

Following is the description of two methods for calculating the absorbance of the inspection target sample.

(Method 1 for Calculating Absorbance)

In a method 1 for calculating the absorbance, the controller 21 calculates the absorbance $Abs_n$ of the inspection target sample at the predetermined evaluation position An by the following Equation (2).
[Expression 2]

$$Abs_n = -\log T_n = \varepsilon c \Delta d_n \quad \cdot \cdot \cdot (2)$$

As indicated by Equation (2) above, the influence of the average scattering distance can be removed from the absorbance $Abs_n$ of the inspection target sample. Thus, in the detection process in step S6 described later, evaluation can be performed focusing on the predetermined evaluation position An of the inspection target sample.

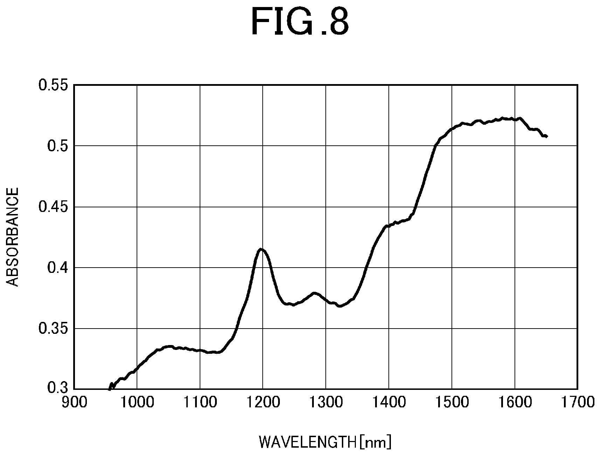

FIG. 8 illustrates an example of the absorption spectrum calculated based on the diffuse transmittance of the inspection target sample. In the example illustrated in FIG. 8, the horizontal axis indicates the wavelength of the measured transmitted diffused light, and the vertical axis indicates the calculated absorbance.

(Method 2 for Calculating Absorbance)

In a method 2 for calculating the absorbance, the controller 21 calculates the absorbance of the inspection target sample based on the light scattering property of the transmitted diffused light at each wavelength.

In Equation (1) above, $\varepsilon c \Delta d_n$ is unknown in the measurement data acquired in step S3. However, a light attenuation property of the diffuse transmittance Tn can be obtained from the measurement data acquired in step S3. The controller 21 estimates $\varepsilon c$ by fitting the light attenuation property of the diffuse transmittance Tn with an exponential function. Thus, the unit absorption spectrum Abs can be calculated.

Alternatively, the controller 21 may estimate $\varepsilon c$ in the above Equation (2) by linearly approximating the attenuation property of the absorbance $Abs_n$.

Alternatively, the controller 21 may estimate the scattering coefficient and the absorption coefficient using a suitable model such as a light diffusion theory based on a measurement approach of spatially resolved spectroscopy (SRS).

When the light diffusion theory is used, the controller 21 obtains a plurality of pieces of spectral information (intensities of the transmitted diffused light) that are spatially different by the SRS method. Next, the controller 21 calculates the scattering coefficient $\mu_s'$ and the absorption coefficient $\mu_a$ by substituting the light attenuation property of the spectral information into a light diffusion equation and solving the simultaneous equations. Thus, the scattering coefficient $\mu_s'$ and the absorption coefficient $\mu_a$ themselves can be calculated, so that the internal state of the inspection target sample can be precisely detected in the detection process in step S6 described later.

A light diffusion equation $R(\rho)$ at the same radial distance (average scattering distance) $\rho$ is shown in Equation (3) below, where the scattering direction is randomized at a certain depth $Z_0$ in a scattering medium according to the principle of multiple light scattering, thereby generating a virtual light source. The effective attenuation coefficient $\mu_{eff}$ is shown in Equation (4) below.

[Expression 3]

$$R(\rho) = z_0\left(\frac{1}{\rho} + \mu_{eff}\right)\frac{\exp\left(-\mu_{eff}\rho\right)}{2\pi\rho^2} \quad \cdots (3)$$

$$\mu_{eff} = \sqrt{3\mu_a(\mu_a + \mu_s')} \quad \cdots (4)$$

The controller 21 calculates the scattering coefficient $\mu_s'$ and the absorption coefficient $\mu_a$ by Equations (3) and (4) to perform fitting to a diffusion theory model shown in Equations (5) to (9) below.

[Expression 4]

$$R(\rho) = \frac{a'}{4\pi}\left[\frac{1}{\mu_t'}\left(\mu_{eff} + \frac{1}{r_1}\right)\frac{\exp\left(-\mu_{eff}r_1\right)}{r_1^2} + \left(\frac{1}{\mu_t'} + 2Z_b\right)\left(\mu_{eff} + \frac{1}{r_2}\right)\frac{\exp\left(-\mu_{eff}r_2\right)}{r_2^2}\right] \quad \cdots (5)$$

$$a' = \frac{\mu_s}{\mu_t'} \quad \cdots (6)$$

$$Z_b = 2AD \quad \cdots (7)$$

$$r_1 = \sqrt{z_0^2 + \rho^2} \quad \cdots (8)$$

$$r_2 = \sqrt{(z_0 + 2z_b)^2 + \rho^2} \quad \cdots (9)$$

D represents the diffusion coefficient, and A represents an internal reflection parameter.

Returning to FIG. 5, the controller 21 performs pre-processing on the absorption spectrum of the inspection target sample calculated in step S4 (step S5). The pre-preprocessing includes, for example, noise processing, normalization, correction processing (e.g., baseline correction processing), standard normal variate (SNV) processing, smoothing by the Savitzky-Golay method, and differential processing.

Next, the controller 21 performs the detection process for detecting the internal state of the inspection target sample (step S6). The controller 21 serves as a detector. Step S6 is a detection step.

Hereinafter, four examples of detecting the internal state of the inspection target sample will be described.

(Example 1 of Detection Process)

In Example 1 of the detection process, the controller 21 detects an internal defect of the inspection target sample as the internal state of the inspection target sample.

Specifically, the controller 21 detects an internal defect of the inspection target sample by comparing the light scattering property of the reference sample measured in advance with the light scattering property of the inspection target sample. The light scattering property of the inspection target sample is the measurement data after the dark correction process in step S11. In this case, the controller 21 may omit step S12 and step S13.

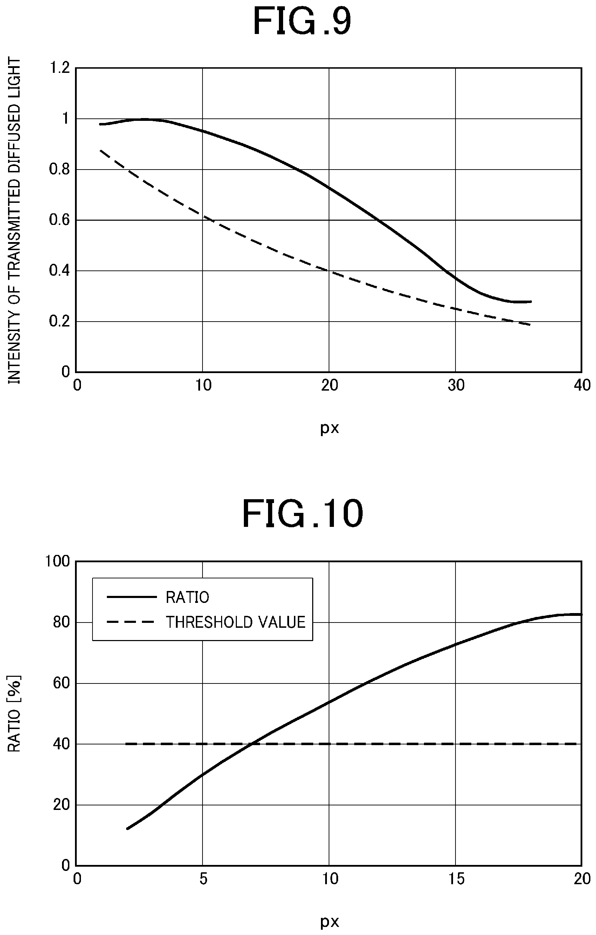

A broken line illustrated in FIG. 9 indicates the light scattering property of the reference sample stored in the storage section 22, for example. A solid line illustrated in FIG. 9 indicates the light scattering property of the inspection target sample. In the example illustrated in FIG. 9, the horizontal axis indicates the pixel (px) in the Z-axis direction, and the vertical axis indicates the intensity of the transmitted diffused light. In the example illustrated in FIG. 9, the reference sample is a normal sample having no internal defect, and the inspection target sample is a sample having an internal defect.

Next, the controller 21 calculates a difference between the light scattering property of the reference sample and the light scattering property of the inspection target sample. Next, when the calculated difference exceeds a predetermined threshold value, the controller 21 determines that an internal defect has occurred in a portion of the inspection target sample where the difference exceeds the predetermined threshold value.

Alternatively, the controller 21 calculates a ratio of the light scattering property of the reference sample to the light scattering property of the inspection target sample. Next, when the calculated ratio exceeds a predetermined threshold value, the controller 21 determines that an internal defect has occurred in the inspection target sample.

A solid line illustrated in FIG. 10 indicates the ratio of the light scattering property of the reference sample to the light scattering property of the inspection target sample. A broken line illustrated in FIG. 10 indicates the predetermined threshold value for the ratio. In the example illustrated in FIG. 10, the horizontal axis indicates the pixel (px) in the Z-axis direction, and the vertical axis indicates the ratio of the light scattering property of the reference sample to the light scattering property of the inspection target sample.

In the example illustrated in FIG. 10, the controller 21 determines that an internal defect has occurred in a portion of the inspection target sample where the ratio exceeds the threshold value.

Alternatively, the controller 21 detects an internal defect of the inspection target sample based on a deviation between the light scattering property of the inspection target sample and an exponential attenuation property. The light scattering property of the inspection target sample is the measurement data after the dark correction process in step S11. In this case, the controller 21 may omit step S12 and step S13.

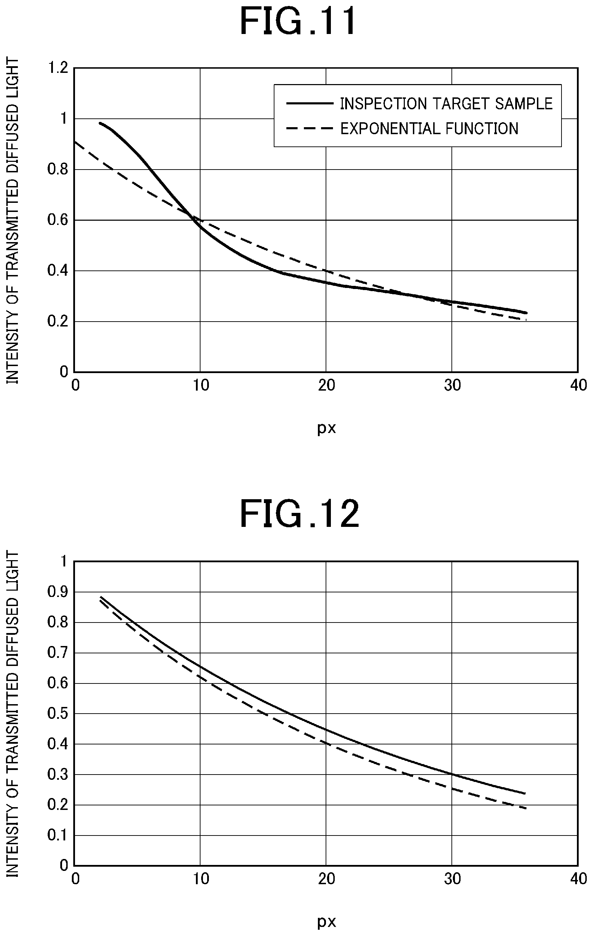

A solid line illustrated in FIG. 11 indicates the light scattering property of the inspection target sample. A broken line illustrated in FIG. 11 indicates the exponential attenuation property. In the example illustrated in FIG. 11, the horizontal axis indicates the pixel (px) in the Z-axis direction, and the vertical axis indicates the intensity of the transmitted diffused light.

The controller 21 calculates a determination coefficient of a fitting result between the light scattering property of the inspection target sample after the dark correction process in step S11 and the exponential attenuation property. Next, when the calculated determination coefficient is less than a predetermined threshold value (e.g., 0.94), the controller 21 determines that an internal defect has occurred in the inspection target sample.

That is, the controller 21 detects a deviation from the exponential attenuation property in the light scattering property of the inspection target sample to detect an internal defect of the inspection target sample.

(Example 2 of Detection Process)

In Example 2 of the detection process, the controller 21 evaluates the amorphous structure of the lyophilized pharmaceutical product as the internal state of the inspection target sample. The lyophilized pharmaceutical product has an amorphous (non-crystalline) pore structure due to the way the product is produced. When a problem occurs in the lyophilization process in the production process of the lyophilized pharmaceutical product, the amorphous pore structure and/or size of the lyophilized pharmaceutical product becomes defective rather than normal. In this case, a difference occurs in light scattering property between a sample with a defective amorphous pore structure and a sample with a normal amorphous pore structure.

Therefore, the controller 21 evaluates the amorphous structure of the lyophilized pharmaceutical product by comparing the light scattering property of the reference sample measured in advance with the light scattering property of the inspection target sample. The light scattering property of the inspection target sample is the measurement data after the dark correction process in step S11. In this case, the controller 21 may omit step S12 and step S13.

A broken line illustrated in FIG. 12 indicates the light scattering property of the reference sample stored in the storage section 22, for example. A solid line illustrated in FIG. 12 indicates the light scattering property of the inspection target sample. In the example illustrated in FIG. 12, the horizontal axis indicates the pixel (px) in the Z-axis direction, and the vertical axis indicates the intensity of the transmitted diffused light. In the example illustrated in FIG. 12, the reference sample is a sample whose amorphous pore structure is normal, and the inspection target sample is a sample whose amorphous pore structure is defective.

Next, the controller 21 calculates a difference between the light scattering property of the reference sample and the light scattering property of the inspection target sample. Next, when the calculated difference exceeds a predetermined threshold value, the controller 21 determines that the amorphous pore structure is defective due to a problem in the lyophilization process.

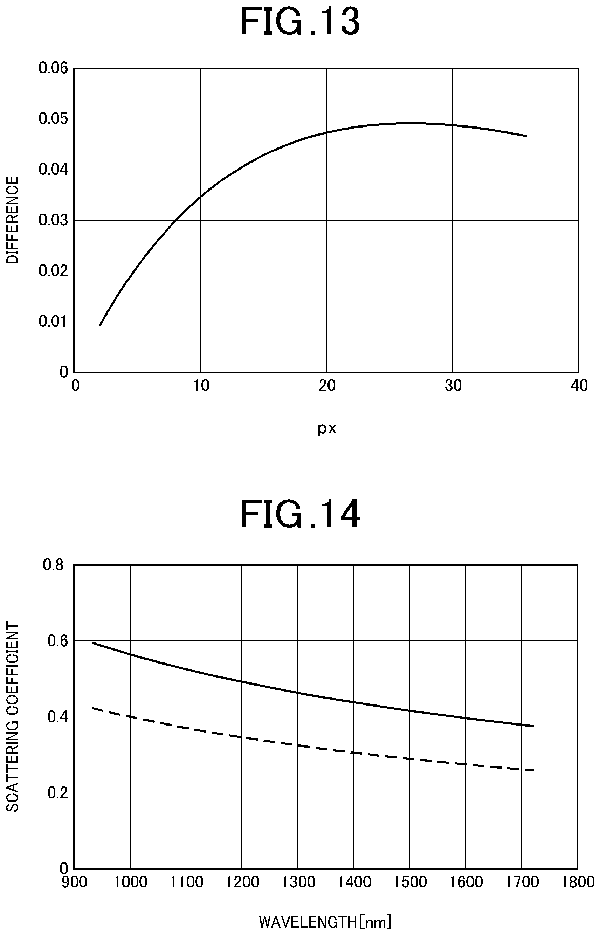

FIG. 13 illustrates the difference between the light scattering property of the reference sample and the light scattering property of the inspection target sample. In the example illustrated in FIG. 13, the horizontal axis indicates the pixel (px) in the Z-axis direction, and the vertical axis indicates the difference between the light scattering property of the reference sample and the light scattering property of the inspection target sample.

In the example illustrated in FIG. 13, the controller 21 determines that the amorphous pore structure is defective in a portion of the inspection target sample where the difference exceeds the predetermined threshold value.

Alternatively, the controller 21 calculates a ratio of the light scattering property of the reference sample to the light scattering property of the inspection target sample. Next, when the calculated ratio exceeds a predetermined threshold value, the controller 21 determines that the amorphous pore structure is defective due to a problem in the lyophilization process.

Alternatively, the controller 21 fits the light scattering property of the transmitted diffused light of the inspection target sample at each wavelength with an exponential function. Thus, the controller 21 calculates the attenuation coefficient of the light scattering property of the transmitted diffused light of the inspection target sample at each wavelength. Next, the controller 21 evaluates the amorphous structure of the lyophilized pharmaceutical product based on the calculated attenuation coefficient. Specifically, the controller 21 calculates a difference with respect to the reference sample at each wavelength to determine that the amorphous pore structure is defective in a portion of the inspection target sample where the difference exceeds a predetermined threshold value. For example, when the average value of the calculated difference spectrum in the wavelength direction is equal to or greater than a predetermined threshold value (e.g., 0.02), the controller 21 determines that an internal defect has occurred in the inspection target sample.

Alternatively, similar to the method 2 for calculating the absorbance, the controller 21 calculates the scattering coefficient of the light scattering property of the transmitted diffused light of the inspection target sample at each wavelength by using a suitable model such as the light diffusion theory based on the measurement approach of the SRS.

A broken line illustrated in FIG. 14 indicates the scattering coefficient of the light scattering property of the reference sample at each wavelength stored in the storage section 22, for example. A solid line illustrated in FIG. 14 indicates the scattering coefficient of the light scattering property of the inspection target sample at each wavelength. In the example illustrated in FIG. 14, the horizontal axis indicates the wavelength of the transmitted diffused light, and the vertical axis indicates the scattering coefficient. In the example illustrated in FIG. 14, the reference sample is a sample whose amorphous pore structure is normal, and the inspection target sample is a sample whose amorphous pore structure is defective.

Next, the controller 21 evaluates the amorphous structure of the lyophilized pharmaceutical product based on the calculated scattering coefficient. Specifically, the controller 21 calculates a difference with respect to the reference sample at each wavelength to determine that the amorphous pore structure is defective in a portion of the inspection target sample where the difference exceeds a predetermined threshold value. For example, when the average value of the calculated difference spectrum in the wavelength direction is equal to or greater than a predetermined threshold value (e.g., 0.02), the controller 21 determines that an internal defect has occurred in the inspection target sample.

(Example 3 of Detection Process)

In Example 3 of the detection process, the controller 21 evaluates the uniformity of a distribution of a component contained in the inspection target sample as the internal state of the inspection target sample. The component contained in the inspection target sample includes a desired active pharmaceutical ingredient (API), an excipient, moisture, and the like.

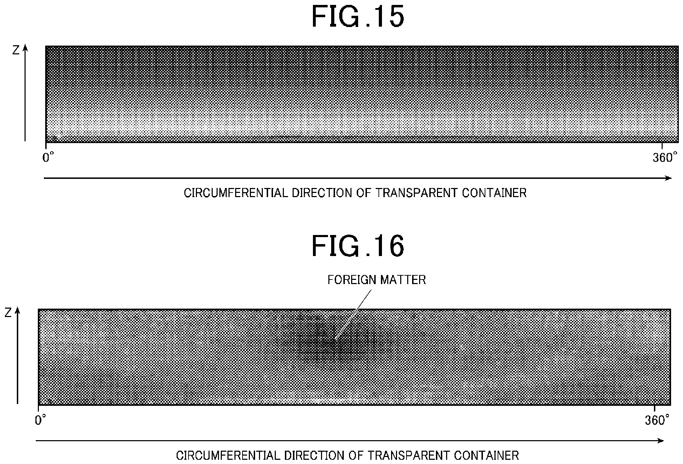

Specifically, the controller 21 generates imaging data that is a distribution of the intensity of the transmitted diffused light, based on the intensity of the transmitted diffused light for one rotation of the inspection target sample. The intensity of the transmitted diffused light for one rotation of the inspection target sample is the measurement data after the dark correction process in step S11. In this case, the controller 21 may omit step S12 and step S13. FIG. 15 illustrates an example of the imaging data. In the example illustrated in FIG. 15, the horizontal axis indicates the rotation angle of the transparent container B in the circumferential direction.

Next, the controller 21 evaluates the uniformity of the distribution of the component contained in the inspection target sample using the generated imaging data. The imaging data reflects absorption properties of the component contained in the inspection target sample. Therefore, by evaluating the uniformity of the distribution of the component contained in the inspection target sample using the imaging data, it is possible to detect a local component bias in the inspection target sample.

Instead of the intensity of the transmitted diffused light of the inspection target sample, the controller 21 may generate imaging data that is a distribution of the absorption spectrum based on the absorption spectrum after the pre-processing in step S5.

The controller 21 performs, for example, the following evaluation as the evaluation of the uniformity of the distribution of the component contained in the inspection target sample. Specifically, the controller 21 divides the imaging data into suitable regions. Next, the controller 21 evaluates the uniformity of the distribution of the component by calculating the variation rate of the intensity of the transmitted diffused light for each divided region relative to the average value of the intensity of the transmitted diffused light in the entire imaging data. The controller 21 may calculate the variation rate of the absorption spectrum for each divided region relative to the average value of the absorption spectrum in the entire imaging data.

(Example 4 of Detection Process)

In Example 4 of the detection process, the controller 21 detects foreign matter inside the inspection target sample as the internal state of the inspection target sample. The foreign matter includes unintended rubber, resin, glass, or the like in the inspection target sample.

Specifically, the controller 21 generates imaging data that is a distribution of the intensity of the transmitted diffused light, based on the intensity of the transmitted diffused light for one rotation of the inspection target sample. The intensity of the transmitted diffused light for one rotation of the inspection target sample is the measurement data after the dark correction process in step S11. In this case, the controller 21 may omit step S12 and step S13. FIG. 16 illustrates an example of the imaging data based on the intensity of the transmitted diffused light of the inspection target sample that contains foreign matter. In the example illustrated in FIG. 16, the horizontal axis indicates the rotation angle of the transparent container B in the circumferential direction.

Next, the controller 21 detects, as a spot containing foreign matter, a spot in the generated imaging data where the intensity of the transmitted diffused light locally changes. For example, when a rate of change between the intensity of the transmitted diffused light in a predetermined spot in the imaging data and the average value of the intensity of the transmitted diffused light in 10 pixels adjacent to the predetermined spot is a predetermined threshold value or more, the controller 21 determines that foreign matter is contained in the predetermined spot.

Instead of the intensity of the transmitted diffused light of the inspection target sample, the controller 21 may generate imaging data that is a distribution of the absorption spectrum based on the absorption spectrum after the pre-processing in step S5. In this case, the controller 21 detects, in the generated imaging data, a spot where the absorption spectrum locally changes as a spot containing foreign matter.

The controller 21 estimates the foreign matter based on the absorption spectrum of the spot determined to contain the foreign matter in the imaging data. Specifically, the controller 21 matches the absorption spectra of a plurality of types of foreign matter created in advance with the absorption spectrum of the spot determined to contain foreign matter in the imaging data. Next, the controller 21 estimates the foreign matter based on the degree of match between the absorption spectra.

As a result, contamination or the like in the production process of the inspection target sample can be detected. This contributes to the production of a safe sample.

In the above quality inspection process, by measuring the transmitted diffused light with the imaging section 12, it is possible to obtain information on the inside of the sample, instead of obtaining information only on the components on the surface or near the surface of the sample as in the case of reflected light measurement. Thus, the quality of the sample can be more precisely inspected.

[Others]

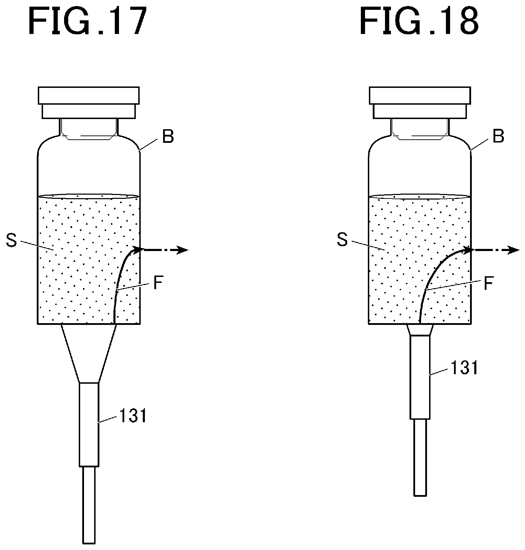

During the measurements in steps S2 and S3 of the above quality inspection process, an illumination region on the bottom surface of the transparent container B illuminated by the illumination section 13 may be adjusted. In the present embodiment, the illumination region can be adjusted to the entire bottom surface of the transparent container B or only the vicinity of the center of the transparent container B, for example. Specifically, as illustrated in FIG. 17, the illumination region can be increased by increasing the distance from the tip end surface of the lighting light 131 to the bottom surface of the transparent container B. On the other hand, as illustrated in FIG. 18, the illumination region can be reduced by shortening the distance from the tip end surface of the lighting light 131 to the bottom surface of the transparent container B. For another example, the illumination region can be increased by guiding the illumination light with all the optical fibers constituting the lighting light 131 to hit the bottom surface of the transparent container B. The illumination region can be reduced by guiding the illumination light only with the optical fiber(s) at the center among the optical fibers constituting the lighting light 131 to hit the bottom surface of the transparent container B.

By adjusting the illumination region on the bottom surface of the transparent container B illuminated by the illumination section 13, the distance of the optical path F of the illumination light passing through the sample S can be adjusted. Thus, the distance of the optical path F can be suitably set according to the absorbance of the sample S. For example, when the absorption of the illumination light by the sample S is significantly small, the amount of the illumination light absorbed by the sample S can be increased by increasing the distance of the optical path F of the illumination light.

[Effects]

The quality inspection apparatus 1 according to the present embodiment inspects the quality of an inspection target sample filled in the transparent container B. The inspection target sample is a lyophilized or powdery pharmaceutical product. The quality inspection apparatus 1 includes the illumination section 13 that illuminates the bottom surface of the transparent container B. The quality inspection apparatus 1 includes the imaging section 12 that images the lateral surface of the transparent container B. The quality inspection apparatus 1 includes the acquisition section (controller 21) that acquires the light scattering property based on the imaging result of the imaging section 12. The quality inspection apparatus 1 includes the detector (controller 21) that detects the internal state of the inspection target sample based on the light scattering property acquired by the acquisition section.

Therefore, the internal state of the inspection target sample can be detected without destroying the inspection target sample. Therefore, the quality inspection apparatus 1 can perform inspection for all lyophilized or powdery pharmaceutical products when these products are produced. That is, the quality of the lyophilized or powdery pharmaceutical product can be more precisely inspected.

In the quality inspection apparatus 1 according to the present embodiment, the detector (controller 21) detects an internal defect of the inspection target sample as the internal state of the inspection target sample.

Therefore, an internal defect of the inspection target sample can be detected without destroying the inspection target sample.

In the quality inspection apparatus 1 according to the present embodiment, the detector (controller 21) compares the light scattering property of the reference sample measured in advance with the light scattering property of the inspection target sample to detect an internal defect.

Therefore, an internal defect of the inspection target sample can be precisely detected by comparing the light scattering properties.

In the quality inspection apparatus 1 according to the present embodiment, the detector (controller 21) detects a deviation from the exponential attenuation property in the light scattering property to detect an internal defect.

Therefore, an internal defect of the inspection target sample can be precisely detected by detecting a deviation from the exponential attenuation property.

In the quality inspection apparatus 1 according to the present embodiment, the detector (controller 21) evaluates the amorphous structure of the lyophilized pharmaceutical product as the internal state of the inspection target sample.

Therefore, the amorphous structure of the lyophilized pharmaceutical product can be evaluated without destroying the lyophilized pharmaceutical product.

In the quality inspection apparatus 1 according to the present embodiment, the detector (controller 21) evaluates the amorphous structure of the lyophilized pharmaceutical product by comparing the light scattering property of the reference sample measured in advance with the light scattering property of the inspection target sample.

Therefore, the amorphous structure of the lyophilized pharmaceutical product can be precisely evaluated by comparing the light scattering properties.

In the quality inspection apparatus 1 according to the present embodiment, the imaging section 12 acquires spectral information of the inspection target sample by imaging the inspection target sample.

The detector (controller 21) evaluates the amorphous structure of the lyophilized pharmaceutical product based on the attenuation coefficient or the scattering coefficient calculated based on the light scattering property including the spectral information.

Therefore, the amorphous structure of the lyophilized pharmaceutical product can be precisely evaluated based on the attenuation coefficient or the scattering coefficient.

In the quality inspection apparatus 1 according to the present embodiment, the detector (controller 21) evaluates the uniformity of the distribution of the component contained in the inspection target sample as the internal state of the inspection target sample.

Therefore, the uniformity of the distribution of the component contained in the inspection target sample can be evaluated without destroying the lyophilized pharmaceutical product.

In the quality inspection apparatus 1 according to the present embodiment, the imaging section 12 acquires the spectral information by imaging the inspection target sample.

The acquisition section (controller 21) acquires the intensity of the transmitted diffused light including the spectral information based on the imaging result of the imaging section 12.

The detector (controller 21) evaluates the uniformity of the distribution of the component contained in the inspection target sample based on the distribution of the intensity of the transmitted diffused light or the absorption spectrum distribution calculated based on the intensity of the transmitted diffused light.

Therefore, the uniformity of the distribution of the component contained in the inspection target sample can be precisely evaluated based on the distribution of the intensity of the transmitted diffused light or the absorption spectrum distribution calculated based on the intensity of the transmitted diffused light.

In the quality inspection apparatus 1 according to the present embodiment, the detector (controller 21) detects foreign matter inside the inspection target sample as the internal state of the inspection target sample.

Therefore, foreign matter in the inspection target sample can be detected without destroying the lyophilized pharmaceutical product.

In the quality inspection apparatus 1 according to the present embodiment, the acquisition section (controller 21) acquires the intensity of the transmitted diffused light based on the imaging result of the imaging section 12.

The detector (controller 21) detects foreign matter based on the distribution of the intensity of the transmitted diffused light or the absorption spectrum distribution calculated based on the intensity of the transmitted diffused light.

Therefore, foreign matter is precisely detected based on the distribution of the intensity of the transmitted diffused light or the absorption spectrum distribution calculated based on the intensity of the transmitted diffused light.

As a result, contamination or the like in the production process of the inspection target sample can be detected. This contributes to the production of a safe sample.

In the quality inspection apparatus 1 according to the present embodiment, the detector (controller 21) estimates the foreign matter based on the absorption spectrum distribution.

Therefore, unknown foreign matter can be identified.

In the quality inspection apparatus 1 according to the present embodiment, the imaging section 12 captures images at a plurality of points in the vertical direction from the bottom surface of the transparent container B.

The acquisition section (controller 21) acquires the light scattering property based on the intensity of the transmitted diffused light at the plurality of points.

Therefore, the internal state of the inspection target sample can be detected at a plurality of points with different distances in the vertical direction from the bottom surface of the transparent container B.

Although the preferred embodiment of the present disclosure has been described in detail with reference to the accompanying drawings, the technical scope of the present disclosure is not limited to such examples. Furthermore, those to which various modification examples and improvements have been applied naturally belong to the technical scope of the present disclosure within the category of the technical idea described in the scope of the claims of those skilled in the art. Although embodiments of the present invention have been described and shown in detail, the disclosed embodiments are made for purposes of illustration and example only and not limitation. The scope of the present invention should be interpreted by terms of the appended claims.

The entire disclosure of Japanese Patent Application No. 2024-102492 filed on June 26, 2024, is incorporated herein by reference in its entirety.

**Claims**

1. A quality inspection apparatus (1) that inspects quality of an inspection target sample filled in a transparent container, comprising:

   an illumination section (13) that illuminates a bottom surface of the transparent container;
   an imaging section (12) that images a lateral surface of the transparent container; and
   a hardware processor (21) that

   acquires a light scattering property of the inspection target sample based on an imaging result of the imaging section (12), and
   detects an internal state of the inspection target sample based on the acquired light scattering property, wherein

   the inspection target sample is a lyophilized or powdery pharmaceutical product.

2. The quality inspection apparatus (1) according to claim 1, wherein the hardware processor (21) detects an internal defect of the inspection target sample as the internal state of the inspection target sample.

3. The quality inspection apparatus (1) according to claim 2, wherein the hardware processor (21) detects the internal defect by comparing a light scattering property of a reference sample measured in advance with the light scattering property of the inspection target sample.

4. The quality inspection apparatus (1) according to claim 2, wherein the hardware processor (21) detects the internal defect by detecting a deviation from an exponential attenuation property in the light scattering property.

5. The quality inspection apparatus (1) according to claim 1, wherein when the inspection target sample is the lyophilized pharmaceutical product, the hardware processor (21) evaluates an amorphous structure of the lyophilized pharmaceutical product as the internal state of the inspection target sample.

6. The quality inspection apparatus (1) according to claim 5, wherein the hardware processor (21) evaluates the amorphous structure of the lyophilized pharmaceutical product by comparing a light scattering property of a reference sample measured in advance with the light scattering property of the inspection target sample.

7. The quality inspection apparatus (1) according to claim 5, wherein

the imaging section (12) acquires spectral information of the inspection target sample by imaging the lateral surface of the transparent container, and

the hardware processor (21) evaluates the amorphous structure of the lyophilized pharmaceutical product based on an attenuation coefficient or a scattering coefficient that is calculated based on the light scattering property including the spectral information.

8. The quality inspection apparatus (1) according to claim 1, wherein the hardware processor (21) evaluates uniformity of a distribution of a component contained in the inspection target sample as the internal state of the inspection target sample.

9. The quality inspection apparatus (1) according to claim 8, wherein:

the imaging section (12) acquires spectral information of the inspection target sample by imaging the lateral surface of the transparent container;

the hardware processor (21) acquires an intensity of transmitted diffused light, the intensity including the spectral information, based on the imaging result of the imaging section (12); and

the hardware processor (21) evaluates the uniformity of the distribution of the component contained in the inspection target sample based on a distribution of the intensity of the transmitted diffused light or based on an absorption spectrum distribution that is calculated based on the intensity of the transmitted diffused light.

10. The quality inspection apparatus (1) according to claim 1, wherein the hardware processor (21) detects foreign matter inside the inspection target sample as the internal state of the inspection target sample.

11. The quality inspection apparatus (1) according to claim 10, wherein the hardware processor (21) acquires an intensity of transmitted diffused light based on the imaging result of the imaging section (12), and detects the foreign matter based on a distribution of the intensity of the transmitted diffused light or based on an absorption spectrum distribution that is calculated based on the intensity of the transmitted diffused light.

12. The quality inspection apparatus (1) according to claim 11, wherein the hardware processor (21) estimates the foreign matter based on the absorption spectrum distribution.

13. The quality inspection apparatus (1) according to any one of claims 1 to 12, wherein

the imaging section (12) images the lateral surface of the transparent container at a plurality of points with different distances in a vertical direction from the bottom surface of the transparent container, and

the hardware processor (21) acquires the light scattering property of the inspection target sample based on a plurality of intensities of transmitted diffused light at the respective plurality of points.

14. A quality inspection method executed by a quality inspection apparatus (1) that inspects quality of an inspection target sample filled in a transparent container and includes:

an illumination section (13) that illuminates a bottom surface of the transparent container; and

an imaging section (12) that images a lateral surface of the transparent container,

the method comprising:

acquiring a light scattering property of the inspection target sample based on an imaging result of the imaging section (12); and

detecting an internal state of the inspection target sample based on the light scattering property acquired in the acquiring, wherein

the inspection target sample is a lyophilized or powdery pharmaceutical product.

15. A program causing a computer of a quality inspection apparatus (1) that inspects quality of an inspection target sample filled in a transparent container and includes:

an illumination section (13) that illuminates a bottom surface of the transparent container; and

an imaging section (12) that images a lateral surface of the transparent container

to execute:

acquiring a light scattering property of the inspection target sample based on an imaging result of the imaging section (12); and

detecting an internal state of the inspection target sample based on the light scattering property acquired in the acquiring, wherein

the inspection target sample is a lyophilized or powdery pharmaceutical product.

# FIG.1

# FIG.2

# FIG.3

# FIG.4

# FIG.5

```
┌─────────────────────────┐
│  QUALITY INSPECTION     │
│      PROCESS            │
└───────────┬─────────────┘
            ↓
┌─────────────────────────┐  S1
│   DARK MEASUREMENT      │
└───────────┬─────────────┘
            ↓
┌─────────────────────────┐  S2
│ MEASUREMENT OF REFERENCE│
│       SAMPLE            │
└───────────┬─────────────┘
            ↓
┌─────────────────────────┐  S3
│ MEASUREMENT OF INSPECTION│
│      TARGET SAMPLE      │
└───────────┬─────────────┘
            ↓
┌─────────────────────────┐  S4
│  ABSORPTION SPECTRUM    │
│  CALCULATION PROCESS    │
└───────────┬─────────────┘
            ↓
┌─────────────────────────┐  S5
│     PRE-PROCESSING      │
└───────────┬─────────────┘
            ↓
┌─────────────────────────┐  S6
│   DETECTION PROCESS     │
└───────────┬─────────────┘
            ↓
┌─────────────────────────┐
│          END            │
└─────────────────────────┘
```

# FIG.6

```
┌─────────────────────────┐
│  ABSORPTION SPECTRUM    │
│  CALCULATION PROCESS    │
└───────────┬─────────────┘
            ↓
┌─────────────────────────┐  S11
│  DARK CORRECTION PROCESS│
└───────────┬─────────────┘
            ↓
┌─────────────────────────┐  S12
│  CALCULATION OF DIFFUSE │
│     TRANSMITTANCE       │
└───────────┬─────────────┘
            ↓
┌─────────────────────────┐  S13
│ CALCULATION OF ABSORPTION│
│      SPECTRUM           │
└───────────┬─────────────┘
            ↓
┌─────────────────────────┐
│          END            │
└─────────────────────────┘
```

# FIG.7

INCIDENT LIGHT $I_0$

# FIG.8

# FIG.9

# FIG.10

# FIG.11

# FIG.12

# FIG.13

# FIG.14

EP 4 671 743 A1
EP 4 671 743 A1

# FIG.15

0°                                                                                    360°

CIRCUMFERENTIAL DIRECTION OF TRANSPARENT CONTAINER

# FIG.16

FOREIGN MATTER

0°                                                                                    360°

CIRCUMFERENTIAL DIRECTION OF TRANSPARENT CONTAINER

# FIG.17

# FIG.18

Europäisches
Patentamt
European
Patent Office
Office européen
des brevets

**EUROPEAN SEARCH REPORT**

Application Number

EP 25 18 2534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 189351 A (HITACHI INFORMATION & CONTROL SOLUTIONS LTD) 4 October 2012 (2012-10-04) | 1-3,10, 14,15 | INV. G01N21/90 G01N21/47 |
| A | * paragraphs [0001], [0002], [0008], [0021], [0024]; figure 1 * | 4-9, 11-13 | G01N21/51 |
| | ----- | | |
| X | EP 0 701 117 A2 (EISAI CO LTD [JP]) 13 March 1996 (1996-03-13) | 1-3,10, 13-15 | |
| A | * figures 3,7 * * page 2, lines 3,4,9-11 * * page 5, lines 9,10,30-32 * | 4-9,11, 12 | |
| | ----- | | |
| X | US 2020/110042 A1 (BONARDI MASSIMO [IT] ET AL) 9 April 2020 (2020-04-09) | 1-3,10, 14,15 | |
| A | * paragraphs [0002], [0018], [0019], [0056], [0066]; figure 3 * | 4-9, 11-13 | |
| | ----- | | |
| X | IT 2021 0002 8025 A1 (STEVANATO GROUP SPA [IT]) 3 May 2023 (2023-05-03) | 1-3, 8-10,14, 15 | |
| A | * the whole document * | 4-7, 11-13 | TECHNICAL FIELDS SEARCHED (IPC) |
| | ----- | | G01N B01F |
| A | US 2020/072736 A1 (LONG STUART B [US] ET AL) 5 March 2020 (2020-03-05) * figures 8A,8B * | 1-15 | |
| | ----- | | |
| A | WO 2006/008819 A1 (EISAI CO LTD [JP]; SHIMIZU KATSUMI [JP]; NAGAYA HIROYUKI [JP]) 26 January 2006 (2006-01-26) * paragraphs [0014], [0026] - [0029]; figure 2 * | 1-15 | |
| | ----- | | |

The present search report has been drawn up for all claims

| Place of search | Date of completion of the search | Examiner |
|---|---|---|
| Berlin | 14 November 2025 | Navas Montero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 2534

14-11-2025

| Patent document cited in search report | | Publication date | Patent family member(s) | | Publication date |
|---|---|---|---|---|---|
| JP 2012189351 | A | 04-10-2012 | JP | 5679564 B2 | 04-03-2015 |
| | | | JP | 2012189351 A | 04-10-2012 |
| EP 0701117 | A2 | 13-03-1996 | EP | 0701117 A2 | 13-03-1996 |
| | | | JP | 3351910 B2 | 03-12-2002 |
| | | | JP | H0875671 A | 22-03-1996 |
| | | | KR | 960011406 A | 20-04-1996 |
| | | | TW | 284684 B | 01-09-1996 |
| | | | US | 5719679 A | 17-02-1998 |
| US 2020110042 | A1 | 09-04-2020 | BR | 112019019805 A2 | 22-04-2020 |
| | | | CN | 110546486 A | 06-12-2019 |
| | | | EP | 3602017 A1 | 05-02-2020 |
| | | | ES | 2982039 T3 | 14-10-2024 |
| | | | RU | 2019129745 A | 23-03-2021 |
| | | | US | 2020110042 A1 | 09-04-2020 |
| | | | WO | 2018172017 A1 | 27-09-2018 |
| IT 202100028025 | A1 | 03-05-2023 | --------------------------------- | | |
| US 2020072736 | A1 | 05-03-2020 | NONE | | |
| WO 2006008819 | A1 | 26-01-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3351910 B
- WO 2007063840 A
- JP 2024102492 A